# EUROPEAN PATENT APPLICATION

(11) **EP 4 339 222 A1**
(43) Date of publication of application: **20.03.2024**
(21) Application number: 22807496.9
(22) Date of filing: 11.05.2022
(51) Int. Cl.: C08G 59/68

(54) **EPOXY RESIN COMPOSITION AND CURED PRODUCT THEREOF**

(30) Priority: 14.05.2021 JP 2021082189
(71) Applicant: Sumitomo Chemical Company Limited, Tokyo 103-6020 (JP)
(72) Inventor: TAKEUCHI, Kenichi, Osaka-shi, Osaka 554-8558 (JP); KATO, Hirofumi, Osaka-shi, Osaka 554-8558 (JP)
(74) Representative: Winter, Brandl - Partnerschaft mbB
(86) International application number: PCT/JP2022/019934
(87) International publication number: WO 2022/239797

(57) **Abstract**

There is provided an epoxy resin composition comprising an epoxy resin (A), a curing agent (B), an imidazole adduct-type curing accelerator (C), and a Lewis acid compound (D) having a boron atom or an aluminum atom, wherein the curing agent (B) comprises a compound (B-1) represented by a formula (B-1)[R¹ denotes a hydrogen atom, a halogen atom, a methoxy group or a hydrocarbon group having 1 to 12 carbon atoms]; and the content of a compound (B-2) represented by a formula (B-2)[R² denotes a hydrogen atom, a halogen atom, a methyl group or a methoxy group] in the curing agent (B) is 0 parts by mass or higher and lower than 2.0 parts by mass based on 100 parts by mass of the epoxy resin (A).

## Description

### Technical Field

The present invention relates to an epoxy resin composition and a cured product thereof.

### Background Art

Epoxy resins are applied to various applications such as for fiber reinforcing materials, electronic components, adhesive agents, coating materials and the like since cured products thereof are excellent in heat resistance, strength, chemical resistance, adhesiveness and the like.

In various applications, compositions containing an epoxy resin (hereinafter, referred to as "epoxy resin compositions" usually contain a curing agent to cure the compositions, and in some cases, further contain a curing accelerator (for example, Japanese Patent Laid-Open No. 2015-083634 (Patent Literature 1) and Japanese Patent Laid-Open No. 2013-032510 (Patent Literature 2)).

### Citation List

### Patent Literature

Patent Literature 1: Japanese Patent Laid-Open No. 2015-083634
Patent Literature 2: Japanese Patent Laid-Open No. 2013-032510

### Summary of Invention

### Technical Problem

For the epoxy resin compositions, properties according to applications thereof are demanded. For the epoxy resin compositions, from the viewpoint of workability, a low viscosity and a long pot life at ordinary temperatures are generally demanded. Further for the epoxy resin compositions, depending on applications thereof, even at high temperatures, a low viscosity and a long pot life are demanded in some cases.

An object of the present invention is to provide an epoxy resin composition having a low viscosity and a long pot life at an ordinary temperature (25°C) and a high temperature (55°C), and a cured product thereof.

### Solution to Problem

The present invention provides an epoxy resin composition, a cured product and the like shown below.
[1] An epoxy resin composition, comprising:
   an epoxy resin (A);
   a curing agent (B);
   an imidazole adduct-type curing accelerator (C); and
   a Lewis acid compound (D) having a boron atom or an aluminum atom,
   wherein the curing agent (B) comprises a compound (B-1) represented by the following formula (B-1); and
   the content of a compound (B-2) represented by the following formula (B-2) in the curing agent (B) is 0 parts by mass or higher and lower than 2.0 parts by mass based on 100 parts by mass of the epoxy resin (A), 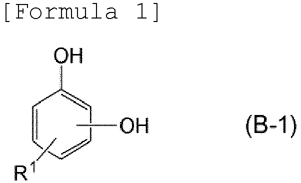
   wherein R¹ denotes a hydrogen atom, a halogen atom, a methoxy group or a hydrocarbon group having 1 to 12 carbon atoms, 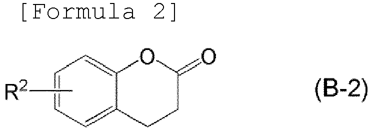
   wherein R² denotes a hydrogen atom, a halogen atom, a methyl group or a methoxy group.
[2] The epoxy resin composition according to [1], wherein the content of the Lewis acid compound (D) is 0.01 parts by mass or higher and 30 parts by mass or lower based on 100 parts by mass of the epoxy resin (A).
[3] The epoxy resin composition according to [1] or [2], wherein the Lewis acid compound (D) comprises one or more compounds selected from the group consisting of borate ester compounds and aluminum alkoxide compounds.
[4] The epoxy resin composition according to any one of [1] to [3], wherein the curing agent (B) comprises no compound (B-2).
[5] The epoxy resin composition according to any one of [1] to [4], wherein the molar ratio of the content of a phenolic hydroxyl group to the content of an epoxy group in the epoxy resin composition is 0.20 or higher and 0.75 or lower.
[6] The epoxy resin composition according to any one of [1] to [5], wherein the epoxy resin (A) comprises an epoxy resin having two epoxy groups in the molecule.
[7] A cured product of an epoxy resin composition according to any one of [1] to [6].
[8] A prepreg, comprising an epoxy resin composition according to any one of [1] to [6], and a fiber.
[9] A composition comprising a cured product of an epoxy resin composition according to any one of [1] to [6] , and a fiber.
[10] A cured product of a prepreg according to [8].

### Advantageous Effects of Invention

An epoxy resin composition having a low viscosity and a long pot life at an ordinary temperature (25°C) and a high temperature (55°C), and a cured product thereof can be provided.

### Description of Embodiments

### <Epoxy resin composition>

The epoxy resin composition according to the present invention (hereinafter, referred to also as "epoxy resin composition") comprises an epoxy resin (A), a curing agent (B), an imidazole adduct-type curing accelerator (C), and a Lewis acid compound (D) having a boron atom or an aluminum atom.

The cured product (B) comprises a compound (hereinafter, referred to also as "compound (B-1)") represented by the above formula (B-1), and may further comprise a compound (hereinafter, referred to also as "compound (B-2)") represented by the above formula (B-2).

Hereinafter, there will be described in detail each component which is contained or may be contained in the epoxy resin composition, and the epoxy resin composition.

Compounds exemplified herein as each component which is contained or may be contained in the epoxy resin composition each can be used, unless otherwise specified, singly or in combinations of a plurality thereof.

### [1] Epoxy resin (A)

The epoxy resin (A) is not particularly limited as long as it has one or more epoxy groups in one molecule thereof, but from the viewpoint of curability of the epoxy resin composition and the heat resistance, the strength and the like of the cured product, preferably comprises an epoxy resin having two or more epoxy groups in one molecule thereof, and more preferably comprises an epoxy resin having two epoxy groups in one molecule thereof.

Examples of the epoxy resin having two or more epoxy groups in one molecule thereof include:
aromatic glycidyl ether-type epoxy resins, which can be obtained by reaction, with epichlorohydrin, of a polyhydric phenol compound such as a novolac resin obtained by condensation or cocondensation, with aldehydes, of bisphenol A, bisphenol F, bisphenol AD, bisphenol S, biphenyldiol, naphthalenediol or phenols;
aliphatic glycidyl ether-type epoxy resins, which can be obtained by reaction, with epichlorohydrin, of a polyhydric alcohol compound such as 1,4-butanediol, 1,6-hexanediol, polyethylene glycol, polypropylene glycol, neopentyl glycol, glycerol, pentaerythritol, or sorbitol;
glycidyl ester-type epoxy resins, which can be obtained by reaction, with epichlorohydrin, of a polybasic acid such as phthalic acid, hexahydrophthalic acid or a dimer acid;
glycidyl amine-type epoxy resins, which can be obtained by reaction, with epichlorohydrin of an amine such as aniline, toluidine, diaminodiphenylmethane, p-aminophenol or p-aminocresol; and
alicyclic epoxy resins, which can be obtained by oxidizing, with a peracid (peracetic acid or the like), an olefinic compound having two or more unsaturated bonds in its molecule, such as soybean oil or polybutadiene, or a cyclic olefin compound having two or more unsaturated bonds in its molecule, such as indene, 4-vinyl-1-cyclohexene or 3-cyclohexenylmethyl 3-cyclohexene-1-carboxylate.

The epoxy resins exemplified in the above may be epoxy resins having two epoxy groups in their molecule.

Examples of the aromatic glycidyl ether-type epoxy resin having two epoxy groups in its molecule include bisphenol A epoxy resins, bisphenol F epoxy resins, bisphenol AD epoxy resins, bisphenol S epoxy resins, biphenyldiol epoxy resins and naphthalenediol epoxy resins.

Examples of the aliphatic glycidyl ether-type epoxy resin having two epoxy groups in its molecule include hydrogenated bisphenol A epoxy resins, 1,4-butanediol diglycidyl ether, 1,6-hexanediol diglycidyl ether, polyethylene glycol diglycidyl ether, polypropylene glycol diglycidyl ether and neopentyl glycol diglycidyl ether.

Examples of the glycidyl ester-type epoxy resin having two epoxy groups in its molecule include diglycidyl phthalate, diglycidyl hexahydrophthalate and dimer acid diglycidyl esters.

Examples of the glycidyl amine-type epoxy resin having two epoxy groups in its molecule include glycidylaniline and glycidyltoluidine.

From the viewpoint of the viscosity of the epoxy resin, the viscosity and the curability of the epoxy resin composition, the heat resistance and the strength of the cured product, and the like, the epoxy resin (A) preferably contains an aromatic glycidyl ether-type epoxy resin, more preferably contains a bisphenol-type epoxy resin and still more preferably contains a bisphenol A-type epoxy resin.

The epoxy resin (A) preferably contains a liquid epoxy resin, and when the epoxy resin (A) contains one or two or more epoxy resins, the epoxy resin (A) is more preferably liquid as the epoxy resin (A) as a whole.

Herein, "liquid" refers to exhibiting fluidity at 25°C. Herein, a substance being "liquid" usually exhibits viscousness, and its viscosity, in the viscosity range which cannot be measured by a viscometer (EMS viscometer) using an electro magnetically spinning method or an EMS viscometer, as a viscosity at 25°C by an E type viscometer, can be 0.0001 Pa·s to 1,000 Pa·s and may also be 0.001 Pa·s to 500 Pa·s.

The case of being "liquid" includes being in such a state that one or more components are dispersed in the other components.

Examples of the case where the epoxy resin (A) is liquid as a whole include the following.
a) The case where the epoxy resin (A) is composed of one liquid epoxy resin.
b) The case where the epoxy resin (A) is a mixture of two or more liquid epoxy resins.
c) The case where the epoxy resin (A) is a mixture of one or more liquid epoxy resins and one or more solid epoxy resins, and the mixture is liquid.
d) The case where the epoxy resin (A) is a mixture of two or more solid epoxy resins, and the mixture is liquid.

Therefore, the epoxy resin (A) can contain a solid epoxy resin. Herein, "solid" refers to being solid at 25°C. A solid epoxy resin may be dissolved or dispersed in a liquid epoxy resin. In order to carry out the curing reaction homogeneously, it is preferable that the solid epoxy resin be homogeneously dissolved.

From the viewpoint of adjusting the viscosity of the epoxy resin composition in a preferable range, the viscosity of the epoxy resin (A) (in the case of containing two or more epoxy resins, the viscosity of a mixture of the two or more epoxy resins) as a viscosity at 25°C by an EMS viscometer is preferably 50 Pa·s or lower, more preferably 40 Pa·s or lower and still more preferably 20 Pa·s or lower.

The viscosity at 25°C of the epoxy resin (A) is usually 0.01 Pa·s or higher, may be 0.1 Pa·s or higher and may also be 1 Pa·s or higher.

The viscosity of the epoxy resin (A) is, as a viscosity at 25°C by an EMS viscometer, preferably 0.01 Pa·s or higher and 50 Pa·s or lower, more preferably 0.1 Pa·s or higher and 40 Pa·s or lower and still more preferably 1 Pa·s or higher and 20 Pa·s or lower.

Epoxy resins having two or more epoxy groups in their molecule may be used singly or in combination of two or more.

Combination use of a bisphenol A epoxy resin and a biphenyl epoxy resin is preferable because such use may sometimes function advantageously in satisfaction of both the good heat resistance and the good tensile property.

It is preferable that the epoxy resin (A) comprises an epoxy resin having two epoxy groups in its molecule.

The epoxy resin (A) may comprise one or more epoxy resins selected from the group consisting of epoxy resins having two epoxy groups in their molecule, epoxy resins having one epoxy group in their molecule and epoxy resins having three or more epoxy groups in their molecule.

The content of the epoxy resin having two epoxy group in its molecule in the epoxy resin (A) is, in 100 parts by mass of the epoxy resin (A), for example, 50 parts by mass or higher, and from the viewpoint of the properties (heat resistance and/or the tensile property and the like) of the cured product of the epoxy resin composition, and the like, preferably 60 parts by mass or higher, more preferably 70 parts by mass or higher, still more preferably 80 parts by mass or higher and even more preferably 90 parts by mass or higher, and may also be 100 parts by mass.

The epoxy equivalent of the epoxy resin (A) (in the case of containing two or more epoxy resins, the epoxy equivalent of a mixture of the two or more epoxy resins) is, from the viewpoint of the tensile property, the heat resistance, the strength and the like of the cured product of the epoxy resin composition, preferably 30 g/eq or higher and 500 g/eq or lower, more preferably 40 g/eq or higher and 400 g/eq or lower, still more preferably 50 g/eq or higher and 300 g/eq or lower and even more preferably 50 g/eq or higher and 250 g/eq or lower.

The epoxy equivalent of the epoxy resins can be measured according to JIS K7236.

### [2] Curing agent (B)

The curing agent (B) comprises a compound capable of crosslinking and curing the epoxy resin (A). As such a compound, the curing agent (B) comprises a compound (B-1) represented by the above formula (B-1), and may further comprise a compound (B-2) represented by the above formula (B-2).

The curing agent (B) may comprise one compound within the scope of compound (B-1) or may contain two or more compounds within the scope of compound (B-1).

When the curing agent (B) contains a compound (B-2), the curing agent (B) may contain one kind thereof or may contain two or more kinds thereof.

R¹ in the above formula (B-1) represents a hydrogen atom, a halogen atom, a methoxy group or a hydrocarbon group having 1 to 12 carbon atoms.

The halogen atom in R¹ includes a fluorine atom, a chlorine atom, a bromine atom and an iodine atom.

The hydrocarbon group having 1 to 12 carbon atoms in R¹ includes aliphatic groups (alkyl groups and the like), alicyclic groups (cycloalkyl groups and the like), aromatic groups, hydrocarbon groups composed of a combination of an aliphatic group with an alicyclic group, and hydrocarbon groups composed of a combination of an aromatic group and an aliphatic group and/or an alicyclic group.

The number of carbon atoms of the hydrocarbon group is preferably 1 to 8. From the viewpoint of the viscosity of the epoxy resin composition, the hydrocarbon group is a methyl group or a 1-phenylethyl group.

R¹ is preferably a hydrogen atom or a hydrocarbon group, and more preferably a hydrogen atom.

The positional relation of two OH groups of the compound (B-1) may be any of the ortho position, the meta position and the para position, but is, from the viewpoint of reducing the viscosity of the epoxy resin composition and from the viewpoint of suppressing crystal deposition in the epoxy resin composition, preferably the ortho position and the meta position, and more preferably the meta position.

From the viewpoint of reducing the viscosity of the epoxy resin composition, from the viewpoint of suppressing crystal deposition in the epoxy resin composition and from the viewpoint of reducing the dissolving temperature in preparation of the epoxy resin composition, the compound (B-1) is preferably a compound having a melting point of 150°C or lower and more preferably a compound having a melting point of 130°C or lower.

Examples of the compound (B-1) having a melting point of 150°C or lower include catechol (1,2-dihydroxybenzene), resorcinol (1,3-dihydroxybenzene), 4-fluoro-1,3-dihydroxybenzene, 2-chloro-1,3-dihydroxybenzene, 4-chloro-1,3-dihydroxybenzene, 2-methoxy-1,3-dihydroxybenzene, 4-methoxy-1,3-dihydroxybenzene, 5-methoxy-1,3-dihydroxybenzene, 4-methyl-1,3-dihydroxybenzene, 5-methyl-1,3-dihydroxybenzene, 2-ethyl-1,3-dihydroxybenzene, 4-ethyl-1,3-dihydroxybenzene, 5-ethyl-1,3-dihydroxybenzene and 4-(1-phenylethyl)-1,3-dihydroxybenzene.

In the epoxy resin composition according to one preferred embodiment, the compound (B-1) comprises 1,3-dihydroxybenzene.

In the above formula (B-2), R² represents a hydrogen atom, a halogen atom, a methyl group or a methoxy group.

The halogen atom in R² includes a fluorine atom, a chlorine atom, a bromine atom and an iodine atom.

R² is, from the viewpoint of the melting point, preferably a hydrogen atom, a methyl group or a methoxy group, and more preferably a hydrogen atom.

When in an epoxy resin composition according to one preferred embodiment, the compound (B-1) contains 1,3-dihydroxybenzene, and the curing agent (B) contains a compound (B-2), the compound (B-2) contains dihydrocoumalin (R²: hydrogen atom).

Then, in an epoxy resin composition according to another preferred embodiment, the curing agent (B) contains a compound (B-1) and contains no compound (B-2). In this embodiment, preferably, the compound (B-1) contains 1,3-dihydroxybenzene.

The content of the compound (B-2) is 0 parts by mass or higher and 2.0 parts by mass or lower, preferably 0 parts by mass or higher and 1.8 parts by mass or lower, more preferably 0 parts by mass or higher and 1.5 parts by mass or lower, still more preferably 0 parts by mass or higher and 1.0 part by mass or lower, further still more preferably 0 parts by mass or higher and 0.8 parts by mass or lower and especially preferably 0 parts by mass or higher and 0.5 parts by mass or lower, based on 100 parts by mass of the epoxy resin (A). Regulating the content of the compound (B-2) in the above range is advantageous in making low the viscosity at high temperatures of the epoxy resin composition and elongating the pot life thereof at high temperatures, and advantageous particularly in elongating the pot life at high temperatures.

When the content of the compound (B-2) in the epoxy resin composition is excessively high, the pot life at high temperatures of the epoxy resin composition may be degraded.

Making the compound (B-1) to be contained in the epoxy resin composition is advantageous in improving properties (heat resistance, tensile property and/or the like) of a cured product of the epoxy resin composition.

The epoxy resin composition may further contain a compound having 3 or more phenolic hydroxyl groups. Making the compound to be contained can improve properties (heat resistance, tensile property and/or the like) of a cured product of the epoxy resin composition in some cases.

Examples of the compound having three or more phenolic hydroxide groups include compounds in which one hydrogen atom bonded directly to the benzene ring of the compound (B-1) is replaced by a hydroxide group, phenol resins and novolac resins.

Then, the epoxy resin composition may contain a compound having one phenolic hydroxide group. The compound having one phenolic hydroxide group includes phenol, cresol, xylenol and t-butylphenol.

The molar ratio of the content of the phenolic hydroxyl group to the content of the epoxy group in the epoxy resin composition is 0.20 or higher and 0.75 or lower, and from the viewpoint of improving properties (heat resistance, tensile property and/or the like) of a cured product of the epoxy resin composition, preferably 0.25 or higher and 0.67 or lower, more preferably 0.3 or higher and 0.6 or lower, still more preferably 0.35 or higher and 0.55 or less and further still more preferably 0.4 or higher and 0.5 or lower.

The "content of the epoxy group in the epoxy resin composition" refers to the number (molar number) of epoxy groups of the epoxy resin (A).

The "content of the phenolic hydroxide group" is the content of the phenolic hydroxide group in the epoxy resin composition, and refers to the total of the number (molar number) of the phenolic hydroxide group of the compound (B-1) and the number (molar number) of the phenolic hydroxide group of phenolic compounds having a phenolic hydroxide group other than the compound (B-1).

The content of the compound (B-1) in the epoxy resin composition is preferably such an amount that the above molar ratio falls within the above range, and is for example, 1 part by mass or higher and 30 parts by mass or lower, preferably 5 parts by mass or higher and 25 parts by mass or lower and more preferably 8 parts by mass or higher and 22 parts by mass or lower, based on 100 parts by mass of the epoxy resin (A).

The ratio of the content of the compound (B-2) to the content of the compound (B-1) is, from the viewpoint of the curability, and the pot life at high temperatures of the epoxy resin composition, in mass ratio, preferably 0 or higher and 2 or lower, more preferably 0 or higher and 1 or lower, still more preferably 0 or higher and 0.5 or lower, further still more preferably 0 or higher and 0.3 or lower and especially preferably 0 or higher and 0.2 or lower.

The epoxy resin composition may further contain other curing agents for epoxy resins than those described above. The other curing agents for epoxy resins may be conventionally known curing agents.

However, the content of the other curing agents for epoxy resins in the curing agent (B) is, from the viewpoint of the viscosity or the pot life and properties (heat resistance, tensile property and/or the like) of the cured product, with the total amount of the curing agent (B) being taken to be 100 parts by mass, preferably 20 parts by mass or lower, more preferably 10 parts by mass or lower, still more preferably 5 parts by mass or lower and further still more preferably 1 part by mass or lower (for example, 0 parts by mass).

### [3] Imidazole adduct-type curing accelerator (C)

The term "curing accelerator" used herein refers to an agent having a function of promoting the curing reaction. The term "promoting" used herein also includes the case where the curing reaction is initiated.

In the present invention, among the curing accelerators, the imidazole adduct-type curing accelerator (C) is used. The use of the imidazole adduct-type curing accelerator (C) can become advantageous for satisfaction of both of the pot life and the curability (quick curability and the like) at ordinary temperatures and high temperatures of the epoxy resin composition. This is presumably because the imidazole adduct-type curing accelerator (C) can effectively initiate and/or promote the curing reaction between the epoxy resins (A) and the curing reaction of the epoxy resin (A) with the compound (B-1) and the compound (B-2) (when being contained), and the imidazole adduct-type curing accelerator (C), since generally having latency, functions advantageously in the elongation of the pot life.

The use of the imidazole adduct-type curing accelerator (C) as the curing accelerator is advantageous also in enabling the curing reaction at a relatively low temperature, and is advantageous also in increasing the storage stability of the epoxy resin composition.

The imidazole adduct-type curing accelerator (C) may be used singly or in combination of two or more.

The "latency" refers to such a property that whereas a substance can be stored stably at room temperature (25°C) in the presence of an epoxy resin or even in the presence of an epoxy resin and a curing agent, it can perform a function of promoting the curing reaction by heat, light, pressure or the like.

The imidazole adduct-type curing accelerator (C) to be used in the present invention preferably has such a property (thermal latency) that it can perform a function of promoting the curing reaction by heat. It is preferable that the imidazole adduct-type curing accelerator (C) has, even at 55°C, the latency (such a property that while it can be stably stored also in the presence of an epoxy resin and a curing agent, it can develop the function of promoting the curing reaction by heat, light, pressure or the like).

The imidazole adduct-type curing accelerator (C) is a compound in which an adding substance is added to an imidazole compound. The addition of the adding substance imparts the latency. The adding substance is, for example, a compound which is capable of being bonded to a N atom, preferably the N atom on the 1-position, of an imidazole ring by the reaction with the imidazole compound. The bond is usually a covalent bond.

The adding substance is preferably a compound capable of imparting good latency, and examples thereof include epoxy compounds, isocyanate compounds, (meth)acrylic compounds and urea compounds.

The imidazole adduct-type curing accelerator (C) is preferably a polymeric compound obtained by reacting an imidazole compound with the adding substance.

The adduct may be made further into a solid solution with a phenol resin or the like, or may be subjected to a surface treatment with an organic acid, a borate compound or the like.

The imidazole adduct-type curing accelerator (C) thus produced is usually crushed into a particle size of about 0.5 to 50 µm, and is dispersed in an epoxy resin and used.

Since the imidazole adduct-type curing accelerator (C) is generally low in solubility at room temperature to an epoxy resin, the imidazole adduct-type curing accelerator (C) mixed with the epoxy resin exhibits thermal latency in many cases.

The imidazole adduct-type curing accelerator (C) can be produced by a method disclosed in known Patent Literatures, for example, Japanese Patent Laid-Open Nos. 59-053526, 60-004524, 60-072917, 2005-206744, 06-073156, 06-172495, 2008-214567 and 2014-177525.

As the imidazole adduct-type curing accelerator (C), commercially available products may be used. The commercially available products of the imidazole adduct-type curing accelerator (C) include, in trade names, "Fujicure FXR-1020", "Fujicure FXR-1030", "Fujicure FXR-1032", "Fujicure FXR-1081", "Fujicure FXR-1121" and "Fujicure FXR-1131" (the forgoing, manufactured by T&K TOKA CO., LTD.); "Adeka Hardner EH-5011S" and "Adeka Hardner EH-5046S" (the forgoing, manufactured by ADEKA Corporation); "Curadduct P-0505" (manufactured by SHIKOKU CHEMICALS CORPORATION); "Amicure PN-23", "Amicure PN-23J", "Amicure PN-31", "Amicure PN-31J", "Amicure PN-40", "Amicure PN-40J", "Amicure PN-50", "Amicure PN-F" and "Amicure PN-H" (the forgoing, manufactured by Ajinomoto Fine-Techno Co., Inc.).

The epoxy resin composition may contain one or two or more other curing accelerators than the imidazole adduct-type curing accelerator (C) as long as not inhibiting the advantageous effects of the present invention.

The other curing accelerators are not particularly limited, and examples thereof include tertiary amine compounds and salts thereof, imidazole compounds (non-adduct type), imidazolium salts, phosphorus-based compounds such as triphenylphosphine and phosphonium salts, metal carboxylates and 2,3-dihydro-1H-pyrrolo[1,2-a]benzimidazole (TBZ).

From the viewpoint of more effectively developing the above effect, the content of the other curing accelerators in the curing accelerator is preferably 20 parts by mass or lower, more preferably 10 parts by mass or lower, still more preferably 5 parts by mass or lower and even more preferably 1 part by mass or lower (for example, 0 parts by mass) with the total amount of the curing accelerator being taken to be 100 parts by mass.

The content of the imidazole adduct-type curing accelerator (C) in the epoxy resin composition is, for example, 1 part by mass or higher and 50 parts by mass or lower based on 100 parts by mass of the epoxy resin (A), and from the viewpoint of more effectively developing the above effect, preferably 2 parts by mass or higher and 40 parts by mass or lower, more preferably 3 parts by mass or higher and 30 parts by mass or lower, still more preferably 5 parts by mass or higher and 20 parts by mass or lower and even more preferably 5 parts by mass or higher 15 parts by mass or lower.

### [4] Lewis acid compound (D)

The epoxy resin composition comprises a Lewis acid compound (D) having a boron atom or an aluminum atom (hereinafter, referred to also simply as "Lewis acid compound (D)"). The epoxy resin composition containing the Lewis acid compound (D) enables the viscosity at ordinary temperatures and at high temperatures to be lowered and enables the pot life to be elongated. Then, the epoxy resin composition containing the Lewis acid compound (D) enables the viscosity at ordinary temperatures and at high temperatures to be lowered and the pot life to be elongated, and also enables a cured product of the epoxy resin composition having good properties (heat resistance, tensile property and/or the like) to be obtained without the quick curability being impaired.

It is preferable that the Lewis acid compound (D) be liquid. The meaning of "liquid" is as described above.

The epoxy resin composition can contain one or two or more kinds of the Lewis acid compound (D).

The Lewis acid compound (D) is a compound represented by the following formula (1).

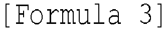

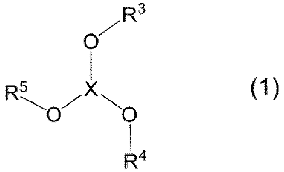

In the formula (1), X denotes B (boron atom) or Al (aluminum atom). R³, R⁴ and R⁵ are each independently a straight-chain or branched-chain alkyl group having 1 to 22 carbon atoms, an aryl group having 6 to 22 carbon atoms or a monovalent group represented by the following formula (2). R³, R⁴ and R⁵ are each optionally substituted with an optional substituent.

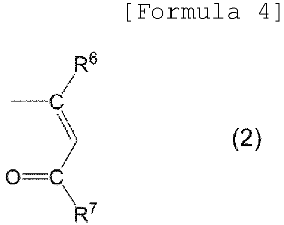

In the formula (2), R⁶ and R⁷ are each independently a straight-chain or branched-chain alkyl group having 1 to 22 carbon atoms, an aryl group having 6 to 22 carbon atoms or an oxyalkyl group having 1 to 22 carbon atoms. R⁶ and R⁷ are each optionally substituted with an optional substituent.

In the formula (1), R³, R⁴ and R⁵ are each independently preferably a straight-chain or branched-chain alkyl group having 1 to 22 carbon atoms or a group represented by formula (2), more preferably a straight-chain or branched-chain alkyl group having 1 to 12 carbon atoms or a group represented by formula (2) and still more preferably a straight-chain or branched-chain alkyl group having 2 to 8 carbon atoms or a group represented by formula (2). R⁶ and R⁷ are each independently preferably a straight-chain or branched-chain alkyl group having 1 to 22 carbon atoms or an oxyalkyl group having 1 to 22 carbon atoms, more preferably a straight-chain or branched-chain alkyl group having 1 to 12 carbon atoms or an oxyalkyl group having 1 to 12 carbon atoms and still more preferably a straight-chain or branched-chain alkyl group having 2 to 8 carbon atoms or an oxyalkyl group having 1 to 8 carbon atoms.

Examples of the Lewis acid compound (D) in which X in the formula (1) is B include triethyl borate, tri-n-propyl borate, tri-i-propyl borate, tri-n-butyl borate, tri-i-butyl borate, tri-sec-butyl borate, tri-t-butyl borate, tri-n-hexyl borate and tri-n-octyl borate.

Examples of the Lewis acid compound (D) in which X in the formula (1) is Al include aluminum sec-butoxide, aluminum diisopropylate mono-sec-butyrate, aluminum ethylacetoacetate diisopropylate, aluminum ethylacetoacetate diisopropylate, aluminum tris(ethylacetoacetate), aluminum monoacetylacetonate bis(ethylacetoacetate) and aluminum stearylacetoacetate diisopropylate.

When the epoxy resin composition contains the Lewis acid compound (D), the content of the Lewis acid compound (D) in the epoxy resin composition is for example, 0.01 parts by mass or higher and 30 parts by mass or lower, and from the viewpoint of lowering the viscosity at ordinary temperatures and high temperatures and elongating the pot life at ordinary temperatures and high temperatures, preferably 0.05 parts by mass or higher and 20 parts by mass or lower, more preferably 0.1 parts by mass or higher and 10 parts by mass or lower, still more preferably 0.2 parts by mass or higher and 5 parts by mass or lower and further still more preferably 0.3 parts by mass or higher and 3 parts by mass or lower, based on 100 parts by mass of the epoxy resin (A).

### [5] Other blend components

The epoxy resin composition can further contain other blend components than the above-mentioned components.

Examples of the other blend components include rubber particles, inorganic particles (particles composed of a metal such as aluminum, or a metal compound such as calcium carbonate or silica), flame retardants, surface treating agents, release agents, antibacterial agents, leveling agents, defoaming agents, thixotropic agents, heat stabilizers, light stabilizers, ultraviolet absorbents, colorants, coupling agents, surfactants, metal alkoxides (ones not belonging to the Lewis acid compound (D)), thermoplastic resins and diluents.

The other blend components may be used singly or in combination of two or more.

Addition of the rubber particles enables the cured product of the epoxy resin composition to maintain the good heat resistance and simultaneously improve the toughness.

Examples of the rubber particles include core-shell type acrylic rubber particles, surface-modified acrylic rubber particles, crosslinked NBR particles and silicone rubber particles. These rubber particles may be conventionally known ones.

The average particle diameter of the rubber particles is, for example, 0.05 µm or higher and 1 µm or lower, and preferably 0.2 µm or higher and 0.5 µm or lower.

With regard to the rubber particles, one type thereof may be used alone, or two or more types thereof may be used in combination.

As the rubber particles, commercially available rubber particles may be used, or dispersion products in which the rubber particles are in advance dispersed in an epoxy resin may be used. Commercially available products of the rubber particles or the dispersion products include, in trade names, "Acryset BPA328" (manufactured by NIPPON SHOKUBAI CO., LTD.); "Kane Ace MX-153", "Kane Ace MX-154", "Kane Ace MX-257" and "Kane Ace MX-960" (the forgoing, manufactured by KANEKA CORPORATION); "Staphyloid AC" series (manufactured by Aica Kogyo Company, Limited); "Paraloid EXL" series (manufactured by Dow Chemical Co.); "Metablen" (manufactured by Mitsubishi Chemical Corporation); "XER-91" (manufactured by JSR Corporation); and "GENIOPERL P52" (manufactured by Wacker Asahikasei Silicone Co., Ltd.).

The content of the rubber particles in the epoxy resin composition is, for example, 1 part by mass or higher and 100 parts by mass or lower based on 100 parts by mass of the epoxy resin (A), and from the viewpoint of more effectively developing the above effect, preferably 5 parts by mass or higher and 80 parts by mass or lower and more preferably 10 parts by mass or higher and 50 parts by mass or lower.

The content of the rubber particles in the epoxy resin composition is, for example, 1% by mass or higher and 50% by mass or lower based on the whole composition, and from the viewpoint of more effectively developing the above effect, preferably 2% by mass or higher and 30% by mass or lower and more preferably 2% by mass or higher and 20% by mass or lower.

### [6] The epoxy resin composition

The epoxy resin composition according to the present invention comprising the epoxy resin (A), the compound (B-1) and the imidazole adduct-type curing accelerator (C), and the compound (B-2) and other components optionally added is preferably liquid. The meaning of "liquid" is as described above.

In the liquid epoxy resin composition, all the components contained therein may be in a dissolved state or may be in such a state that one or more components are dispersed in the other components.

The liquid epoxy resin composition according to the present invention can have a low viscosity. Due to being a low viscosity, the productivity and workability of products using the epoxy resin composition can be improved. For example, since a method for producing a molded material (composition) containing a cured product of the epoxy resin composition and fibers and the like comprises a step of impregnating textiles or bundles of the fibers with the epoxy resin composition, use of the low-viscosity epoxy resin composition enables the impregnability of the epoxy resin composition to be increased.

The viscosity of the epoxy resin composition is, as a viscosity at 25°C by an EMS viscometer, preferably 50 Pa·s or lower, more preferably 40 Pa·s or lower, still more preferably 30 Pa·s or lower, further still more preferably 25 Pa·s or lower and especially preferably 20 Pa·s or lower. The viscosity at 25°C of the epoxy resin composition is usually 0.01 Pa·s or higher and may also be 0.1 Pa·s or higher or may also be 1 Pa·s or higher.

The viscosity of the epoxy resin composition is, as a viscosity at 25°C by an EMS viscometer, preferably 0.01 Pa·s or higher and 50 Pa·s or lower, more preferably 0.1 Pa·s or higher and 40 Pa·s or lower, still more preferably 1 Pa·s or higher and 30 Pa·s or lower, further still more preferably 1 Pa·s or higher and 25 Pa·s or lower and especially preferably 1 Pa·s or higher and 20 Pa·s or lower.

The viscosity of the epoxy resin composition is, as a viscosity at 55°C by a rheometer, preferably 20 Pa·s or lower, more preferably 10 Pa·s or lower, still more preferably 5 Pa·s or lower, further still more preferably 2 Pa·s or lower and especially preferably 1 Pa·s or lower. The viscosity at 25°C of the epoxy resin composition is usually 0.01 Pa·s or higher and may also be 0.05 Pa·s or higher or may also be 0.1 Pa·s or higher.

The viscosity of the epoxy resin composition is, as a viscosity at 55°C by a rheometer, preferably 0.01 Pa·s or higher and 20 Pa·s or lower, more preferably 0.05 Pa·s or higher and 10 Pa·s or lower, still more preferably 0.1 Pa·s or higher and 5 Pa·s or lower, further still more preferably 0.1 Pa·s or higher and 2 Pa·s or lower and especially preferably 0.1 Pa·s or higher and 1 Pa·s or lower.

The epoxy resin composition according to the present invention can have a long pot life. For example, it is preferable that the viscosity of the epoxy resin composition when being stored, for example, for 1 day or longer, 5 days or longer, 7 days or longer or further 9 days or longer from the preparation of the composition be in the above range. Then, when the time until the viscosity when rheometer measurement is carried out at 55°C becomes two times the lowest viscosity is defined as the pot life at 55°C, the pot life at 55°C of the epoxy resin composition is, for example, 500 s or longer, preferably 700 s or longer, more preferably 1,000 s or longer and still more preferably 1,200 s or longer.

The epoxy resin composition according to the present invention can exhibit good curability. That is, the epoxy resin composition can be cured fully in a relatively short heat curing time and/or at a relatively low temperature.

### <Cured product>

The cured product according to the present invention is the one made by curing the above epoxy resin composition according to the present invention.

The cured product according to the present invention, since being a cured product of the epoxy resin composition according to the present invention, can have a good heat resistance or can further have a good tensile property.

The cured product according to the present invention can exhibit a glass transition temperature of, for example, 90°C or higher, further 100°C or higher, further 110°C or higher and further 115°C or higher.

The cured product according to the present invention can have an elongation at break in the tensile property according to JIS K7161-1 and JIS K7161-2 of, for example, 5% or higher, further 6% or higher, or further 7% or higher, and further 10% or higher.

The epoxy resin composition and the cured product thereof according to the present invention, since the cured product is excellent in the heat resistance and excellent further also in the tensile property, can be applied to various applications, and can be used, for example, as a resin composition for adhesives, encapsulation of electronic parts, and impregnation of fibers. Further the epoxy resin composition according to the present invention, since being low in viscosity at ordinary temperatures and high temperatures and excellent in impregnability, having a long pot life at ordinary temperatures and high temperatures, being cured in a short time by heating (for example, at 135°C, 15 min) and being excellent in productivity, can suitably be used as a resin composition for encapsulation of electronic parts and impregnation of fibers.

The present invention relates also to a product or a part comprising the above cured product. One example of the product is a molded material (composition) comprising the cured product and fibers and the like. The product or part comprising the cured product may contain components, for example, fibers, other than components originated from the epoxy resin composition (the cured product).

Hereinafter, a case of using the epoxy resin composition according to the present invention as a resin composition for impregnation of fibers will be described.

As the fibers to be concurrently used with the epoxy resin composition according to the present invention, fibers can be used, such as PAN-based carbon fibers, pitch-based carbon fibers, glass fibers, aramid fibers or kenaf fibers. The surface of the fibers may be subjected to a well-known sizing treatment.

As a method for fabricating a molded material by making a complex of the epoxy resin composition according to the present invention with fibers, a known method can be used. The method specifically includes:
a wet filament winding method in which fibers are impregnated with the epoxy resin composition, and then wound and molded and heat cured on a molding metal mold such as a mandrel;
a dry filament winding method in which a tow prepreg obtained by impregnating fibers with the epoxy resin composition is in advance provided, and is wound and molded and heat cured on a molding metal mold such as a mandrel;
a resin transfer molding method in which a preform fabricated by fabricating textiles of fibers and laminating and press pressurizing the fiber textiles in a metal mold is vacuum impregnated with the epoxy resin composition and heat cured;
a sheet winding method in which a prepreg obtained by impregnating a textile of fibers with the epoxy resin composition is in advance provided, and wound and molded and heat cured on a molding metal mold such as a mandrel;
a press molding method in which prepregs obtained by impregnating textiles of fibers with the epoxy resin composition are in advance provided, and laminated in a metal mold, and heat and pressure cured by a press; and
an autoclave molding method in which a prepreg obtained by impregnating a textile of fibers with the epoxy resin composition is in advance provided, and mounted on a molding jig and covered with a bag film, and heat and pressure cured in an autoclave.

The present invention provides also a cured product of a prepreg comprising the epoxy resin composition according to the present invention and a fiber. Examples of the cured product of the prepreg include cured products of prepregs (tow prepregs or the like) in which fibers or fabrics of fibers are previously impregnated with the epoxy resin composition. The cured products may be, as described above, cured molded materials.

### Examples

Hereinafter, the present invention will be described more specifically by way of Examples, but the present invention is not limited to these Examples. In Examples, "%" and "parts" indicating contents or amounts used are in terms of mass unless otherwise specified.

### <Examples 1 to 9, Comparative Examples 1 to 5>

### (1) Preparation of epoxy resin compositions

Each component indicated in Table 1 and Table 2 provided below was mixed in an amount blended indicated in Table 1 and Table 2 provided below to thereby prepare epoxy resin compositions. In Table 1 and Table 2, the unit of the amount of each component blended is parts by mass. In all Examples and Comparative Examples, the epoxy resin compositions obtained were liquid (exhibiting fluidity at 25°C) .

The column of the "OH/EP molar ratio" in Table 1 and Table 2 shows the molar ratios of the contents of the phenolic hydroxide group in the epoxy resin compositions to the contents of the epoxy group therein, which are calculated from amounts charged.

Details of each blend component indicated in Table 1 and Table 2 are as follows.
[a] Epoxy resin 1: a liquid epoxy resin manufactured by Adeka Corp. trade name: "Adeka Resin EP-4300" (bisphenol A-type epoxy resin, epoxy equivalent: 185 g/eq, viscosity: 8 Pa·s (25°C))
[b] Curing agent 1: 1,3-dihydroxybenzene (resorcin)
[c] Curing agent 2: dihydrocoumalin
[d] Curing accelerator 1: an imidazole adduct-type curing accelerator manufactured by ADEKA Corporation, trade name: "Adeka Hardner EH-5011S" (latent)
[e] Lewis acid compound 1: tri-n-butyl borate
[f] Lewis acid compound 2: triethyl borate

### (2) Evaluation of the epoxy resin compositions and cured products thereof

### (2-1) The viscosity and the pot life (25°C) of the epoxy resin compositions

About 2 g of each of the epoxy resin compositions stored in a 25°C thermostatic chamber for a predetermined period right after the preparation was enclosed together with a 4.7-mm aluminum spherical probe in a test tube. The test tube was set on an EMS viscometer (EMS-1000), manufactured by Kyoto Electronics Manufacturing Co., Ltd., set at 25°C; and the viscosity of the epoxy resin composition was measured under the conditions of a motor rotation frequency of 1,000 rpm, a measurement time of 2 min, and a measurement interval of 30 sec. The results are shown in Table 1 and Table 2. In Table 1 and Table 2, "-" means that no measurement was carried out.

The pot life can be evaluated from the amount of the viscosity increased with respect to the storage period.

### (2-2) Viscosity and pot life (55°C) of the epoxy resin compositions

For epoxy resin compositions prepared, the viscosity behavior at 55°C was measured under the condition of a rotating speed of 10 rpm by using a rheometer ("MCR 302", manufactured by AntonPaar GmbH). The lowest viscosity and the pot life obtained by the measurement results are shown in Table 1 and Table 2. The time until the viscosity when rheometer measurement was carried out at 55°C became two times the lowest viscosity was defined as a pot life at 55°C.

### (2-3) Glass transition temperature (Tg) of the cured products

An epoxy resin composition was poured in a metal mold heated at a predetermined temperature, and held at the temperature for 30 min to carry out a curing reaction of a layer of the epoxy resin composition.

About 40 mg of an obtained cured product of the epoxy resin composition was weighed in an aluminum cell, and the glass transition temperature (Tg) was measured by using a differential scanning calorimeter "DSC7000X", manufactured by Hitachi High-Tech Science Corp. The results are shown in Table and Table 2.

The temperature was raised at a temperature-rise rate of 10°C/min from -40°C to 200°C; then, the temperature was cooled at a temperature-fall rate of - 1,000°C/min from 200°C to -40°C; and the middle point in the stepwise change in a DSC curve observed when the temperature was again raised at a temperature-rise rate of 10°C/min from -40°C to 200°C was taken as Tg (°C).

### (2-4) Elongation at break of the cured products

For a cured product of the epoxy resin composition, the elongation at break in the tensile property was measured according to JIS K7161-1 and JIS K7161-2.

Specifically, an epoxy resin composition was poured in a metal mold heated at a predetermined temperature and held at the temperature for 30 min to be cured to thereby obtain a plate-like cured product. A strip test piece was cut out from this plate-like cured product.

On the test piece obtained, the tensile test was carried out at a rate of 10 mm/min according to JIS K7161-1 and JIS K7161-2 by using an Autograph (AGX-10kNXplus) manufactured by SHIMADZU CORPORATION. The results are shown in Table 1 and Table 2. In the measurement of the elongation at break, the distance between marked lines was calculated by using a video-type noncontact extensometer (TRview).

**[Table 1]**

| | | | Example | | | | Comparative Example | | | | |
|---|---|---|---|---|---|---|---|---|---|---|---|
| | | | 1 | 2 | 3 | 4 | 1 | 2 | 3 | 4 | 5 |
| Epoxy resin (A) | Epoxy resin 1 | | 100.0 | 100.0 | 100.0 | 100.0 | 100.0 | 100.0 | 100.0 | 100.0 | 100.0 |
| Curing agent (B) | Curing agent 1 | | 11.6 | 11.6 | 11.6 | 11.6 | 11.6 | 11.6 | 11.6 | 11.6 | 11.6 |
| | Curing agent 2 | | 0.0 | 0.5 | 1.0 | 0.0 | 0.0 | 3.0 | 10.0 | 2.0 | 3.0 |
| | OH/EP molar ratio | | 0.40 | 0.40 | 0.40 | 0.40 | 0.40 | 0.40 | 0.40 | 0.40 | 0.40 |
| Curing accelerator (C) | Curing accelerator 1 | | 72 | 7.2 | 7.2 | 7.2 | 7.2 | 7.2 | 7.2 | 7.2 | 7.2 |
| Lewis acid compound (D) | Lewis acid compound 1 | | 0.61 | 0.061 | 0.61 | | | | | 0.61 | 0.61 |
| | Lewis acid compound 2 | | | | | 0.40 | | | | | |
| Evaluation results | 25°C viscosity (Pa·s) | rignc arter preparation | 16.9 | 16.6 | 16.2 | 17.5 | 21.1 | 15.7 | 9.4 | 14.7 | 140 |
| | | after 1 day | 17.1 | - | 16.3 | 18.2 | 22.4 | 18.0 | 15.2 | 14.8 | 14.1 |
| | | after 2 day | 17.4 | - | - | 18.6 | 23.5 | 19.2 | 21.0 | - | - |
| | | after 3 day | 174 | - | - | - | 24.6 | 21.1 | 27.6 | - | - |
| | | after 4 day | - | - | - | - | - | - | - | - | - |
| | | after 5 day | - | 17.6 | 17.1 | 199 | - | - | - | 15.6 | 145 |
| | | after 6 day | - | - | - | 20.2 | - | - | - | - | - |
| | | after 7 day | - | - | - | 206 | 31.5 | 29.7 | measuring upper limit | - | - |
| | | after 9 day | 18.7 | 17.6 | 171 | - | - | - | - | 15.6 | 145 |
| | 55°C rheometer | lowest viscosity (Pa·s) | 0.56 | 0.60 | 0.62 | 0.63 | 0.94 | 075 | 0.62 | 0.59 | 0.58 |
| | | pot life (s) | >6000 | 1548 | 1243 | >6000 | 348 | 468 | 912 | 768 | 588 |
| | Tg(°C) | | 108 | 113 | 115 | 112 | 94 | 111 | 105 | 115 | 113 |
| | Elongation at break (%) | | 9.7 | 8.3 | 10.5 | 5.8 | 7.9 | 10.1 | 9.0 | 10.5 | 13.3 |

**[Table 2]**

| | | | Example | | | | |
|---|---|---|---|---|---|---|---|
| | | | 5 | 6 | 7 | 8 | 9 |
| Epoxy resin (A) | Epoxy resin 1 | | 100.0 | 100.0 | 100.0 | 100.0 | 100.0 |
| Curing agent (B) | Curing agent 1 | | 174 | 17.4 | 17.4 | 18.8 | 20.3 |
| | Curing agent 2 | | 0.0 | 0.0 | 0.0 | 0.0 | 0.0 |
| | OH/EP molar ratio | | 0.60 | 0.60 | 0.60 | 0.65 | 0.70 |
| Curing accelerator (C) | Curing accelerator 1 | | 4.0 | 5.0 | 6.0 | 5.0 | 5.0 |
| Lewis acid compound (D) | Lewis acid compound 1 | | 0.62 | 0.62 | 0.61 | 0.62 | 0.63 |
| Evaluation results | 25°C viscosity (Pa·s) | right after preparation | 20.0 | 27.9 | 20.0 | 19.8 | 21.3 |
| | | after 1 day | 20.8 | - | 20.4 | - | - |
| | | after 2 day | 21.5 | 29.1 | 21.0 | - | - |
| | | after 3 day | 21.8 | - | - | 22.0 | 24.0 |
| | | after 4 day | - | - | - | 22.5 | 24.5 |
| | | after 5 day | - | 32.1 | - | 24.0 | 26.5 |
| | | after 6 day | 23.9 | - | - | - | - |
| | | after 7 day | 24.3 | - | - | - | - |
| | | after 9 day | - | - | 24.6 | - | - |
| | 55°C rheometer | lowest viscosit (Pa·s) | 0.60 | 0.71 | 0.64 | 0.65 | 0.69 |
| | | pot life (s) | 5088 | 2076 | 1276 | 1944 | 1356 |
| | Tg (°C) | | 98 | 101 | 102 | 106 | 104 |
| | Elongation at break (%) | | 14.5 | 12.1 | 11.6 | 13.6 | 22.2 |

## Claims

1. An epoxy resin composition, comprising:
an epoxy resin (A);
a curing agent (B);
an imidazole adduct-type curing accelerator (C); and
a Lewis acid compound (D) having a boron atom or an aluminum atom,
wherein the curing agent (B) comprises a compound (B-1) represented by the following formula (B-1); and
a content of a compound (B-2) represented by the following formula (B-2) in the curing agent (B) is 0 parts by mass or higher and lower than 2.0 parts by mass based on 100 parts by mass of the epoxy resin (A), 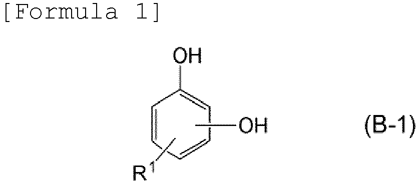
wherein R¹ denotes a hydrogen atom, a halogen atom, a methoxy group or a hydrocarbon group having 1 to 12 carbon atoms, 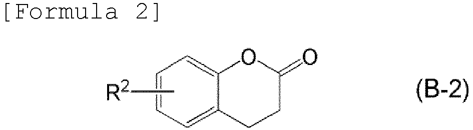 wherein R² denotes a hydrogen atom, a halogen atom, a methyl group or a methoxy group.

2. The epoxy resin composition according to claim 1, wherein a content of the Lewis acid compound (D) is 0.01 parts by mass or higher and 30 parts by mass or lower based on 100 parts by mass of the epoxy resin (A).

3. The epoxy resin composition according to claim 1 or 2, wherein the Lewis acid compound (D) comprises one or more compounds selected from the group consisting of borate ester compounds and aluminum alkoxide compounds.

4. The epoxy resin composition according to any one of claims 1 to 3, wherein the curing agent (B) comprises no compound (B-2).

5. The epoxy resin composition according to any one of claims 1 to 4, wherein a molar ratio of a content of a phenolic hydroxyl group to a content of an epoxy group in the epoxy resin composition is 0.20 or higher and 0.75 or lower.

6. The epoxy resin composition according to any one of claims 1 to 5, wherein the epoxy resin (A) comprises an epoxy resin having two epoxy groups in a molecule thereof.

7. A cured product of an epoxy resin composition according to any one of claims 1 to 6.

8. A prepreg comprising an epoxy resin composition according to any one of claims 1 to 6 and a fiber.

9. A composition, comprising a cured product of an epoxy resin composition according to any one of claims 1 to 6, and a fiber.

10. A cured product of a prepreg according to claim 8.
